# EUROPEAN PATENT APPLICATION

(11) **EP 1 703 727 A1**
(43) Date of publication of application: **20.09.2006**
(21) Application number: 06075447.0
(22) Date of filing: 28.02.2006
(51) Int. Cl.: H04N 5/74, G02B 26/08

(54) **Imaging device**

(30) Priority: 15.03.2005 US 79273
(71) Applicant: Barco NV, 8500 Kortrijk (BE)
(72) Inventor: Gerets, Peter, 8800 Roeselare (BE)
(74) Representative: Donné, Eddy

(57) **Abstract**

An imaging device comprising a direct current short arc metal halide lamp and at least one reflective light valve.

## Description

### BACKGROUND OF THE INVENTION

### 1. Field of the Invention

The present invention relates to an imaging device, more specifically to a lighting device or a projection device comprising a direct current metal halide lamp.

### 2. Discussion of the Related Art

As known, an imaging device generally comprises a light source and a reflective light valve such as, for example, a digital micro mirror device (DMD).

The currently applied light sources hereby are high pressure xenon lamps or low pressure alternate current metal halide lamps.

A disadvantage of using said xenon lamps however is that they are highly vulnerable for explosion, thereby forming a real risk for technicians replacing said lamps or working on the imaging device.

Another disadvantage of said xenon lamps is that they are quite expensive compared to, for example said low pressure alternate current metal halide lamps.

A drawback of using alternate current metal halide lamps is that the emitted light fluctuates in function of the polarity of the current supply.

Indeed, alternate current metal halide lamps are known to be characterized a light arc containing two distinct hotspots, whereby the intensity of each of said hotspots alternates with the alternating current.

A disadvantage of said alternating hotspots that emit a very intense light, is that the control of the reflective light valve should be synchronized with the current alternations in order to build a stable image with a continuous brightness.

Moreover it is common practice to use the light of only one of said hotspots, by for example masking the other hotspot, since their different positions implicate that the focal points of the light beams, emitted by both hotspots, are slightly different.

A disadvantage hereof is that only half of the emitted light is used for image building, what clearly is unfavorable for the brightness of the projected image and results in high operation costs.

Another disadvantage of an alternate current metal halide lamp is that such lamps are characterized by a relative long arc, which implicates that the light emitted by such metal halide lamp is spread over a relative big surface, thereby lowering the brightness of the emitted light.

### SUMMARY OF THE INVENTION

The goal of the present invention is to overcome one or more of the aforementioned and other disadvantages.

Therefore the present invention concerns an imaging device comprising a direct current short arc metal halide lamp and at least one reflective light valve.

An advantage of the present invention is that it results in a relative safe and easy to handle metal halide lamp, since these lamps are low-pressure lamps and are not prone to explode and are thus advantageous for the ruggedness of the imaging device.

Another advantage of the present invention is that the metal halide lamp and the reflective light valve can be made relatively compact in view of assemblies of a light source and a reflective light valve with alternate current metal halide lamps or transitive light valves.

Yet another advantage of the present invention is that the direct current short arc metal halide lamps create a stable light beam with a relatively high brightness.

Indeed, direct current short arc metal halide lamps can be used having an arc with a length of less than 6 mm, whereby said light arc is characterized with one single and stable hotspot.

Another advantage of such single and stable hotspot is that the reflective light valve does not need to be synchronized with the light source, thereby facilitating the production of the imaging device and lowering the overall price.

Moreover, all light emitted by the light source used in an imaging device according to the invention is concentrated in one hotspot and can as such be used integrally for image building, resulting in a relative high brightness to power ratio and thus a relative low cost of operation.

The present invention also concerns the use of a direct current short arc metal halide lamp in an imaging device.

### BRIEF DESCRIPTION OF THE DRAWINGS

In order to better explain the characteristics of the invention, the following embodiment of an imaging device according to the invention is described as an example only without being limitative in any way, with reference to the accompanying drawings, in which:
figure 1 schematically represents an imaging device according to the invention;
figure 2 on a greater scale represents the part of figure 1 as indicated by F2.

### DESCRIPTION OF THE PREFERRED EMBODIMENTS

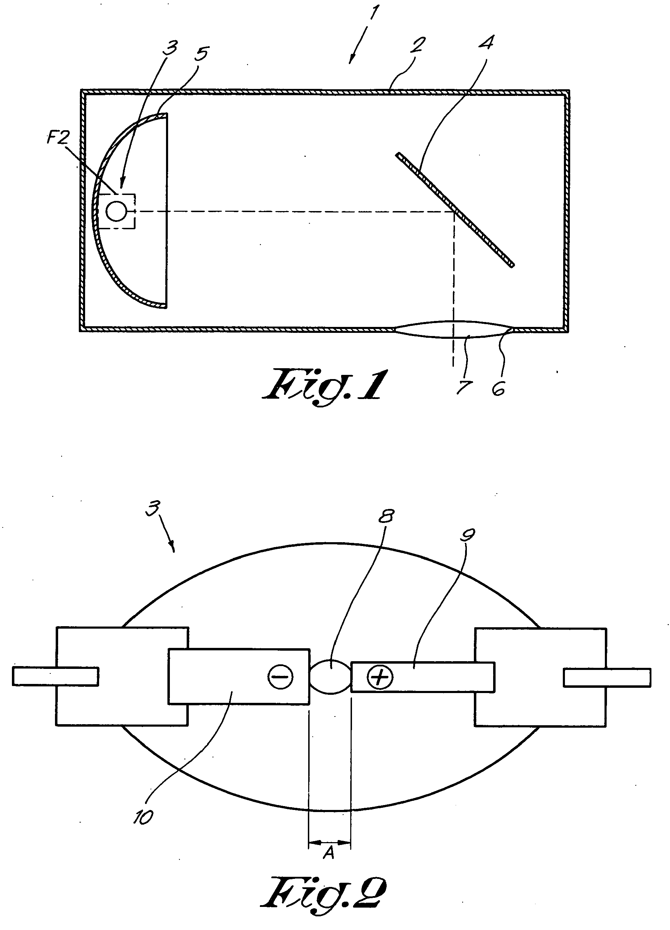

Figure 1 represents an imaging device 1 according to the invention that mainly consists of a housing 2 wherein a light source 3 and a reflective light valve 4 are provided, whereby the light source is preferably provided with a reflector mirror 5.

The housing 2 contains a window 6 wherein or in front of which a lens 7 is provided.

According to the invention, said light source 3 is a direct current short arc metal halide lamp, whereby the length A of the arc 8, as is represented in figure 2, can be defined as the distance between an anode 9 and a cathode 10 of the metal halide lamp. The term short arc should in this case be understood as an arc 8 having a length A that is less than 6 mm, and preferably even less than 3 mm.

It is remarked that said metal halide lamp is preferred to be a high power lamp with a wattage of at least 300W.

Furthermore, the metal halide lamp is preferably a low pressure lamp, which is advantageous in that it is quite safe to manipulate in comparison with high pressure lamps such as xenon lamps, which should be handled with care in order to avoid explosion.

Said reflective light valve 4 may, for example, be a digital micro mirror device or DMD that is generally known as an array of individual micro mirrors reflecting a light beam 11 emitted by the light source 3 on the lens 7 through which it is projected on a screen or wall.

Each mirror hereby corresponds to a pixel of the image to be build and can be switched individually between a position wherein the beam 11 is reflected towards the lens 7 and a position wherein the light beam is reflected away from the lens 7.

So when a mirror is positioned in a so called on-screen position, as represented in figure 1, the corresponding pixel on the screen is lit up, whereas when the mirror is positioned in an off-screen position, whereby the beam 11 is directed away from the lens 7, the corresponding pixel remains unlit.

The working of the imaging device according to the invention is simple and as follows.

When switching on the metal halide lamp, a light beam 11 is created directed towards the reflective light valve 4 that reflects the light beam 11. By programming the reflective light valve 4, parts of the beam emitted by the light source 3 will be reflected through the lens 7 on a screen or wall, thereby building a desired image.

Other parts of the light beam 11 will be reflected away from the lens 7 and absorbed by the housing 2. Said parts of the light beam 11 will result in unlit pixels on the screen or wall.

It is noticed that the imaging device can be either a lighting device or a projection device.

A lighting device is hereby defined as a device used for lightening stages or the like, whereby the image or spot projected on the stage may be moved around, while a projection device is to be understood as a device for projecting movies or such on a fixed screen.

In the case the imaging device is a lighting device, the reflective light valve 4 may be a single digital micro mirror device, whereas in the case the imaging device is a projection device, a multiple digital micro mirror device may be applied, consisting of an array of single digital micro mirror devices.

It is clear that the reflective light valve 4 should not have to be a digital micro mirror device, but that it is also possible to apply an other light valve such as one based on, for example, liquid crystal on silicon technology.

The present invention is by no means limited to the above described embodiment given only as an example and represented in the accompanying drawings; on the contrary, such an imaging device can be realized in all sorts of variants while still remaining within the scope of the present invention.

## Claims

1. An imaging device comprising a direct current short arc metal halide lamp and at least one reflective light valve.

2. The imaging device according to claim 1, wherein said imaging device is a lighting device.

3. The imaging device according to claim 2, wherein said lighting device comprises a single reflective light valve.

4. The imaging device according to claim 1, wherein said imaging device is a projection device.

5. The imaging device according to claim 4, wherein said projection device comprises a multiple reflective light valve.

6. The imaging device according to claim 1, wherein said reflective light valve is a digital micro mirror device.

7. The imaging device according to claim 1, wherein the length of the arc is less than 6 mm.

8. The imaging device according to claim 7, wherein the length of the arc is less than 3 mm.

9. The imaging device according to claim 1, wherein the metal halide lamp is a high power lamp with a wattage of at least 300W.

10. Use of a direct current short arc metal halide lamp in an imaging device such as an lighting device or a projection device.
